# EUROPEAN PATENT SPECIFICATION

(11) **EP 2 451 887 B1**
(45) Date of publication and mention of the grant of the patent: **30.04.2014**
(21) Application number: 10734529.0
(22) Date of filing: 09.07.2010
(51) Int. Cl.: C09K 8/28, C09K 8/36

(54) **EMULSION STABILIZING AGENTS FOR DRILLING AND COMPLETION FLUIDS**
EMULSIONSSTABILISATOREN FÜR BOHR- UND KOMPLETTIERUNGSFLÜSSIGKEITEN
COLLOÏDES PROTECTEURS D ÉMULSION POUR FLUIDES DE FORAGE ET DE COMPLÉTION

(30) Priority: 10.07.2009 US 501267
(43) Date of publication of application: 16.05.2012
(73) Proprietor: Halliburton Energy Services, Inc., Houston, Texas 77072 (US)
(72) Inventor: VAN ZANTEN, Ryan, Spring Texas 77373 (US)
(74) Representative: Ono, Shusuke
(86) International application number: PCT/GB2010/001317
(87) International publication number: WO 2011/004163

(56) References cited:
- EP-A2- 0 037 699
- US-A- 4 542 791
- US-B1- 6 613 720

## Description

### BACKGROUND

The present invention relates to emulsions and methods of using such emulsions. More particularly, the present invention relates to emulsion stabilizing agents and their uses in subterranean applications.

Emulsions usually comprise two immiscible phases. The two immiscible phases may include a continuous (or external) phase and a discontinuous (or internal) phase. The discontinuous phase may comprise the secondary fluid that usually exists in droplets in the continuous phase. Two varieties of emulsions are oil-in-water and water-in-oil. Oil-in-water emulsions usually include a fluid at least partially immiscible in an oleaginous fluid (usually an aqueous-based fluid) as the continuous phase and an oleaginous fluid as the discontinuous phase. Water-in-oil emulsions are the opposite, having the oleaginous fluid as the continuous phase and a fluid at least partially immiscible in the oleaginous fluid (usually an aqueous-based fluid) as the discontinuous phase. Water-in-oil emulsions may be also referred to as invert emulsions.

Such emulsions have been used in various oil and gas applications. For instance, emulsions may be used in the oil and gas industry for subterranean treatment applications, including drilling, production, and completion operations. Invert emulsions may be used because oleaginous-based treatment fluids (also known as muds) may have desirable performance characteristics when compared with water-based muds in some situations, e.g., when there is an abundance of water reactive materials in a well bore. These performance characteristics may include, e.g., better lubrication of the drilling strings and downhole tools, thinner filter cake formation, and better hole stability.

A water-in-oil type emulsion, that does not have an emulsifying agent capable of stabilizing the fluid that is at least partially immiscible in the oleaginous fluid typically will undergo natural degradation processes, such as droplet coalescence and Ostwald ripening, until the two phases which are at least partially immiscible separate and the emulsion no longer exists. Having an unstable invert emulsion may be problematic because if the emulsion destabilizes, it may not have consistent, reliable properties. This problem may be exacerbated by the physical forces that the emulsion may undergo when being used in subterranean applications, such as thermal, mechanical, and chemical stresses. Emulsion stabilizing agents, sometimes referred to as emulsifiers, may be useful in emulsions as stabilizers, especially when used in subterranean applications. The term "emulsion stabilizing agent" or emulsifier as used herein may refer to any compound capable of lowering the interfacial tension between an oleaginous fluid and a fluid at least partially immiscible in the oleaginous fluid.

Some traditional emulsion stabilizing agents are surfactant-based. Surfactant-based emulsion stabilizing agents usually comprise a hydrophobic part that interacts with the oil phase and a hydrophilic part that interacts with the non-oleaginous phase. These interactions generally decrease the surface tension of the interface between the water droplet and the oil, which may slow the natural tendency of the two immiscible phases to separate.

US 6613720 discloses the effect of various chemical or biological agents in well treatment fluids can be delayed by sequestering the agents in the discontinuous phase of an emulsion for a period of time, before the emulsion is destabilized by exposure to at least one of: (1) a change in temperature, (2) a change in pH, (3) a change in salinity, (4) a change in alcohol concentration, (5) a change in stabilizing surfactant concentration, (6) a change in organic ion concentration, (7) a change in destabilizing surfactant concentration, (8) a change in surfactant adsorbent material concentration, (9) an ultrasonic pulse, and (10) an electrical field. Upon exposure to the emulsion destabilizing condition, the agent sequestered in the discontinuous phase of the emulsion is released into the continuous phase of the fluid composition, where it can have its intended effect.

EP 0037699 discloses a polymer-microemulsion complex useful for the enhanced recovery of crude oil is disclosed. The polymer is polyethylene oxide of polyvinyl pyrrolidone and interacts with the surfactant of the microemulsion to form a physical association. The resulting complex is characterized by the complexation energy of at least 2 Kcal/mole. The polymer microemulsion complexes are stable at high salinity, reduce adsorption and retention by the formation, lower interfacial tension, achieve retentions as low as 0.1 mg surfactant/gm sand at high salinity and provide for early banking, as well as high recovery of oil. Enhanced oil recovery fluids using the polymer microemulsion complexes exhibit similar properties.

US4542791 discloses a process for plugging a porous formation in a well bore which comprises pumping a shear-thickening composition into drill pipe in the well under conditions of low shear to the point desired to be plugged at which point the composition is forced through the orifices of a drill bit at the end of the drill pipe and subjected to high shear of at least about 1,000 sec.-1 which forms a paste in the well bore which plugs the porous formation, The shear-thickening composition comprises a water-in-oil emulsion having granular bentonite dispersed in the continuous oily phase, wherein the oily phase has a polyamine derivative surfactant dissolved therein, and the aqueous phase comprises an aqueous solution of a polyacrylamide and a polycarboxylic acid. This process may be used for plugging wells having depths in excess of 8,000 feet.

### SUMMARY

The present invention relates to emulsions and methods of using such emulsions. More particularly, the present invention relates to emulsion stabilizing agents and their uses in subterranean applications.

According to a first aspect of the present invention, there is provided a stabilized emulsion composition comprising: an oleaginous fluid, a fluid that is at least partially immiscible with the oleaginous fluid, and an emulsion stabilizing agent, wherein the emulsion stabilizing agent comprises a first ionic compound soluble in the oleaginous fluid or the fluid that is at least partially immiscible with the oleaginous fluid, and a second ionic compound with a charge of opposite sign of the first ionic compound and that is at least partially soluble in the opposite fluid as the first ionic compound.

The first ionic compound, the second ionic compound, or both comprise an ionic surfactant.

The first ionic compound, the second ionic compound, or both comprise an ionic polyelectrolyte.

One of the first ionic compound and the second ionic compound comprises an ionic surfactant and the other of the first ionic compound and the second ionic compound comprises an ionic polyelectrolyte.

The ionic surfactant comprises an anionic surfactant.

The anionic surfactant comprises at least one compound selected from the group consisting of: an alkyl carboxylate, an alkylether carboxylate, a N-acylaminoacid, a N-acylglutamate, a N-acylpolypeptide, an alkylbenzenesulfonate, a paraffinic sulfonate, an α-olefinsulfonate, a lignosulfate, a derivative of a sulfosuccinate, a polynapthylmethylsulfonate, an alkyl sulfate, an alkylethersulfate, a monoalkylphosphate, a polyalkylphosphate, a fatty acid, an alkali salt of an acid, an alkali salt of a fatty acid, an alkaline salt of an acid, a sodium salt of an acid, a sodium salt of a fatty acid, an alkyl ethoxylate, a soap, a combination thereof; and a derivative thereof

The ionic surfactant comprises a cationic surfactant.

The cationic surfactant comprises at least one compound selected from the group consisting of: an alkyl amine, an alkyl amine salt, a quaternary ammonium salt, an ethoxylated quaternary ammonium salt, an amine oxide, an alkyltrimethyl amine, a triethyl amine, an alkyldimethylbenzylamine, a derivative thereof, and a combination thereof.

The ionic polyelectrolyte comprises an anionic polyelectrolyte.

The anionic polyelectrolyte comprises at least one compound selected from the group consisting of: a polymer or copolymer comprising a carboxylate group; a sulfonate group; a phosphate group or a phosphonate group; or a monomer selected from: an acrylate monomer; a methacrylate monomer; a styrene carboxylate; a vinyl sulfonate; a 2-acrylamine-2-methyl-propyl sulfonate; a 3-acrylamide-3-methyl butanoate or a salt of malic acid, a polyacrylic acid, a partially-hydrogenated polyacrylamide, a carboxy methyl cellulose, a cellulose modified with an anionic functional group, a polysaccharide modified with an anionic functional group, a galactomannan modified with an anionic functional group, a derivative thereof, and a combination thereof.

The ionic polyelectrolyte comprises a cationic polyelectrolyte.

The cationic polyelectrolyte comprises a monomer selected from: a vinyl benzyl trimethyl ammonium chloride; a dimethyldiallyl ammonium chloride or a 3-acrylamido-3-methyl butyl trimethyl ammonium chloride, or at least one compound selected from the group consisting of: a polyethylene imine, a polyamide amine, a polyamine, a polyvinylpyrrolidone, chitosan modified with a cationic functional group, a gelatin modified with a cationic functional group, a functional group, a derivative thereof, and a combination thereof.

In an embodiment, the oleaginous fluid comprises at least one fluid selected from the group consisting of: a diesel oil, a crude oil, a paraffin oil, a mineral oil, a low toxicity mineral oil, an olefin, an ester, an amide, an amine, a polyolefin, a polydiorganosiloxane, a siloxane, an organosiloxane, an ether, an acetal, a dialkylcarbonate, a hydrocarbon, a derivative thereof, and a combination thereof.

In an embodiment, the fluid that is at least partially immiscible with the oleaginous fluid comprises at least one fluid selected from the group consisting of: glycerin, a glycol, a polyglycol amine, a polyol, fresh water, sea water, salt water, a brine, a derivative thereof, and a combination thereof.

According to another aspect of the present invention, there is provided a method comprising: providing a stabilized emulsion composition formed by combining components that comprise: an oleaginous fluid, a fluid that is at least partially immiscible with the oleaginous fluid, and an emulsion stabilizing agent, wherein the emulsion stabilizing agent comprises a first ionic compound soluble in the oleaginous fluid or the fluid that is at least partially immiscible with the oleaginous fluid, and a second ionic compound with a charge of opposite sign of the first ionic compound and that is at least partially soluble in the opposite fluid as the first ionic compound, and placing the stabilized emulsion composition in a subterranean formation as part of a subterranean application. The stabilized emulsion composition may comprise one or more of the embodiments described above.

According to another aspect of the present invention, there is provided a method comprising: providing a stabilized emulsion composition comprising: an oleaginous fluid, a fluid that is at least partially immiscible with the oleaginous fluid, and an emulsion stabilizing agent, wherein the emulsion stabilizing agent comprises a first ionic compound soluble in the oleaginous fluid or the fluid that is at least partially immiscible with the oleaginous fluid, and a second ionic compound with a charge of opposite sign of the first ionic compound and that is at least partially soluble in the opposite fluid as the first ionic compound, and drilling a well bore in a subterranean formation using the stabilized emulsion composition. The stabilized emulsion composition may comprise one or more of the embodiments described above.

Yet another aspect of the present invention comprises a method of preparing a stabilized emulsion composition comprising: providing an oleaginous fluid; providing a fluid that is at least partially immiscible with the oleaginous fluid; providing an emulsion stabilizing agent, wherein the emulsion stabilizing agent comprises: a first ionic compound soluble in the oleaginous fluid or the fluid that is at least partially immiscible with the oleaginous fluid, and a second ionic compound with a charge of opposite sign of the first ionic compound and that is at least partially soluble in the opposite fluid as the first ionic compound; and combining the oleaginous fluid, the fluid that is at least partially immiscible with the oleaginous fluid, and the emulsion stabilizing agent to form a stabilized emulsion composition. The stabilized emulsion composition may comprise one or more of the embodiments described above.

The features and advantages of the present invention will be apparent to those skilled in the art. The invention may be modified within the scope of the appended claims.

### DESCRIPTION OF THE PREFERRED EMBODIMENTS

The present invention relates to emulsions and methods of using such emulsions. More particularly, the present invention relates to emulsion stabilizing agents and their use in subterranean applications.

While there are many advantages to the present invention, only some are disclosed herein. The emulsion stabilizing agents provided by the prcscnt invention may be advantageous because it is believed that the electrostatic interactions of the molecules may serve to anchor the surfactants to the interface between the two phases present in the emulsion or invert emulsion, potentially resulting in an increased surfactant or polyelectrolyte concentration at the interface. This may result in an improved stability of the emulsion and allow a relatively low amount of the emulsion stabilizing agent to be used to achieve a stable emulsion.

The present invention provides emulsion stabilizing agents that comprise a pair of charged surfactant or polyelectrolyte compounds of opposite charge. The emulsion stabilizing agents of the present invention may be used benefcially to stabilize emulsion compositions. Such emulsion compositions that comprise the emulsion stabilizing agents of the present invention may be referred to herein as the "stabilized emulsion compositions" of the present invention. These stabilized emulsion compositions are formed by combining components that comprise an oleaginous fluid, a fluid that is at least partially immiscible with the oleaginous fluid, and an emulsion stabilizing agent of the present invention. After mixing, these components may or may not be separately identifiable, depending on the sophistication of the technique used. The stabilized emulsion compositions may be suitable for use in a variety of subterranean applications wherein oil-in-water or a water-in-oil emulsions are suitable. These may include subterranean applications comprising stimulation operations such as fracturing and sand control treatments such as installing a gravel pack. These may also include drilling and completion operations. Other subterranean applications also may be suitable. One of ordinary skill in the art, with the benefit of this disclosure, will recognize other suitable uses for these emulsion compositions.

The oleaginous fluid utilized in the stabilized emulsion compositions may comprise any traditional oil-based fluids suitable for use in emulsions. The oleaginous fluid may be from a natural or synthetic source. Examples of suitable oleaginous fluids include diesel oils, crude oils, paraffin oils, mineral oils, low toxicity mineral oils, olefins, esters, amides, amines, synthetic oils (such as polyolefins, polydiorganosiloxanes, siloxanes, organosiloxanes and combinations thereof), ethers, acetals, dialkylcarbonates, hydrocarbons and combinations thereof. Examples of suitable oleaginous fluids include those commercially available from Halliburton Energy Services, Inc., in Houston, Tex., U.S.A., under the tradenames "ACCOLADE™," an internal olefin and ester blend invert emulsion base fluid, "PETROFREE^{®}," an ester based invert emulsion base fluid, "PETROFREE^{®} LV" an ester based invert emulsion base fluid, and "PETROFREE^{®} S.F.," an internal olefin based invert emulsion base fluid. Factors that may determine what oleaginous fluid will be used in a particular application, include but are not limited to, cost and performance characteristics of the oleaginous fluid. An additional factor that may be considered is the polarity of the oleaginous fluid. For example, diesel oils are generally more polar than paraffin oils. Other factors that may be ) considered are environmental compatibility and regional drilling practices. For example, in North Sea applications, an ester or internal olefin (IO) may be preferred. In the Gulf of Mexico, applications may prefer to utilize "ACCOLADE™" or a low toxicity mineral oil. One skilled in the art with the benefit of this disclosure will be able to choose a suitable oleaginous fluid for a particular application in view of these considerations. In certain exemplary embodiments of the present invention, the oleaginous fluid may be crude oil.

The emulsion compositions of the present invention also comprise a fluid that is at least partially immiscible in the oleaginous fluid. This partially immiscible fluid may be a non-oleaginous fluid that is mutually insoluble with the chosen oleaginous fluid. Suitable examples of partially immiscible fluids include aqueous-based fluids, glycerin, glycols, polyglycol amines, polyols, derivatives thereof that are partially immiscible in the oleaginous fluid, and combinations thereof. The term "derivative" is defined herein to include any compound that is made from one of the listed compounds, for example, by replacing one atom in the base compound with another atom or group of atoms. Aqueous-based fluids may include, but are not limited to, fresh water, sea water, salt water, and brines (e.g., saturated salt waters). Any brine may be used with the emulsions of the present invention that does not interfere with the emulsion stabilizing agents. One of ordinary skill in the art will appreciate that detrimental interactions may occur between some components of some brines and charged surfactants or polyelectrolyte pairs. Suitable brines may include heavy brines. Heavy brines, for the purposes of this application, include brines that may be used to weight up a fluid, such as a treatment fluid, instead of using traditional weighting agents. Brines may comprise H₂O soluble salts. In certain exemplary embodiments, suitable H₂O soluble salts may comprise sodium chloride, calcium chloride, calcium bromide, zinc bromide, potassium carbonate, sodium formate, potassium formate, sodium acetate, potassium acetate, calcium acetate, ammonium acetate, ammonium chloride, ammonium bromide, sodium nitrate, potassium nitrate, ammonium nitrate, calcium nitrate, sodium carbonate, potassium carbonate, and combinations thereof. In other exemplary embodiments, the H₂O soluble salt may be any salt which reduces the water phase activity of the emulsion. Factors that determine what partially immiscible fluid will be used in a particular application may include cost, availability, and which oleaginous fluid has been chosen. Another factor that may be considered is the application of the emulsion. For example, if the application needs an emulsion with a heavy weight, a zinc bromide or calcium chloride brine may be chosen. One skilled in the art with the benefit of this disclosure in view of the considerations will be able to choose a particularly suitable partially immiscible fluid for a particular application.

As noted above, the stabilized emulsion compositions of the present invention also comprise an emulsion stabilizing agent of the present invention. The emulsion stabilizing agents comprise at least a pair of compounds that may generally comprise two surfactant molecules, polyelectrolyte molecules, or any combination thereof that have opposite charges, which may or may not be of the same magnitude. In general, the members of the pair will be either cationic or anionic. The charge on one or both of the compounds may result from one or more ionic functional groups. As used herein, the term "ionic" or "ionic functional group" may refer to any compound capable of carrying at least a partial positive or negative charge, whether inherent in the chemical structure or formed due to the presence of any other components in a mixture. Such compounds may include ionic groups or compounds, polar groups or compounds, amphoteric groups or compounds, or any other type of material capable of carrying or developing a charge. In some embodiments, the anionic member of the pair may be at least partially soluble in the oleaginous phase while the cationic member may be at least partially soluble in the fluid that is at least partially immiscible in the oleaginous fluid. In other embodiments, the cationic member of the pair may be at least partially soluble in the oleaginous phase while the anionic member may be at least partially soluble in the fluid that is at least partially immiscible in the oleaginous fluid. While not wishing to be limited by theory, it is believed that the electrostatic interactions may occur at the interface between the oleaginous phase and the fluid that is at least partially immiscible in the oleaginous fluid. While each member of the emulsion stabilizing agent pair may be soluble in one of the phases, the combined component formed by the electrostatic interactions may be at least partially insoluble in both phases. The resulting emulsion stabilizing agent pair may remain at the interface between the phases, resulting in an improved stability of the emulsion.

In an embodiment, a member of the emulsion stabilizing agent pair is a surfactant that may carry an anionic or cationic charge. In an embodiment, a surfactant useful with the emulsion stabilizing agent disclosed herein may comprise at least one ionic functional group. Exemplary functional groups may include carboxylates, sulfonates, sulfates, amines, imines, phosphates, and phosphonates. Exemplary cationic surfactans may include, but are not limited to, alkyl amines, alkyl amine salts, quaternary ammonium salt, ethoxylated quaternary ammonium salts, amine oxides, alkyltrimethyl amine, triethyl amine, alkyldimethylbenzylamine. Exemplary anionic surfactants may include, but are not limited to, alkyl carboxylates, alkylether carboxylates, N-acylaminoacids, N-acylglutamates, N-acylpolypeptides, alkylbenzenesulfonates, paraffinic sulfonates, α-olefinsulfonates, lignosulfates, derivatives of sulfosuccinates, polynapthylmethylsulfonates, alkyl sulfates, alkylethersulfates, monoalkylphosphates, polyalkylphosphates, fatty acids, alkali salts of acids, alkali salts of fatty acids, alkaline salts of acids, sodium salts of acids, sodium salts of fatty acid, alkyl ethoxylate, and soaps. One of ordinary skill in the art would be able to determine the phase to which the ionic surfactant should be added, which may be based on the composition of each phase in the emulsion, the solubility of the component in each phase, the operating conditions (e.g., temperature), and any additives present in either phase (*e*,*g*., salts). For example, anionic surfactants may react with any calcium present in the fluid that is at least partially immiscible in the oleaginous fluid to form compounds that may not be effective stabilizers. As such, one of ordinary skill in the art may avoid the use of anionic surfactants in the fluid that is at least partially immiscible in the oleaginous fluid when calcium ions are present.

In an embodiment, a member of the emulsion stabilizing agent pair is a polyelectrolyte that may carry an anionic or cationic charge. As used herein, a polyelectrolyte may be a polymer whose repeating units comprise an electrolyte group. These groups may dissociate in solutions comprising an aqueous fluid, allowing the polymers to carry a formal charge to some degree. For example, a polymer may be prepared that contains an anionic monomer to impart an anionic character to the molecule. Exemplary anionic polyelectrolytes include, but are not limited to, polymers or copolymers derived from anionic monomers containing carboxylates; sulfonates; phosphates or phosphonates; or monomers selected from acrylate monomers; methacrylate; 2-acrylamine-2-methyl-propyl sulfonate; 3-acrylamide-3-methyl butanoate; styrene carboxylate; vinyl sulfonate or salts of malic acid, polyacrylic acid (PAA), partially-hydrogenated polyacrylamide (PHPA), carboxy methyl cellulose, derivatives of cellulose, polysaccharides (e.g., xanthan, arabic gum), and galactomannans modified with anionic functional groups. Non-ionic monomers may be included in these compounds, *e*.*g*., as in a copolymer between an anionic monomer and a neutral monomer. Exemplary cationic polyelectrolytes include, but are not limited to, polymers or copolymers comprising cationic groups such as imines, amines, and copolymers with neutral monomers. Specific examples may include, but are not limited to, polyethylene imine, polyamide amine, polyamines, polyvinylpyrrolidone, polymers or copolymers comprising a monomer selected from vinyl benzyl trimethyl ammonium chloride, dimethyldiallyl ammonium chloride, 3-acrylamido-37-methyl butyl trimethyl ammonium chloride. For example, polymers comprising chitosanes, gelatins, galactomannans and cellulose may be modified with cationic monomers to form cationic polyelectrolytes. The polyelectrolytes useful with the emulsion stabilizing agents disclosed herein may be prepared by any method known to one of ordinary skill in the art.

In an embodiment, the emulsion stabilizing agent may be added to the stabilized emulsion composition in any amount capable of stabilizing the emulsion to a desired degree. The emulsion stabilizing agent pair may be added on a charge balanced basis. For example, if the anionic member of the emulsion stabilizing agent pair carried a formal charge equal to twice that of the cationic member of the emulsion stabilizing agent pair, then the anionic member of the emulsion stabilizing agent pair may be added in an amount equal to half of the total amount of the cationic member of the emulsion stabilizing agent pair on a mole basis. In other embodiments, the members of the emulsion stabilizing agent pair may be added in a ratio not related to the charge on the emulsion stabilizing agent pair members. For example, if it is expected that one member of the pair may interact with other components of the stabilized emulsion, then more or less of that member of the pair may be added to compensate for the interaction. In an embodiment, the emulsion stabilizing agent may be added to a stabilized emulsion composition in an amount ranging from about 0.1 pounds per barrel (lb/bbl) to about 12 lb/bbl (about 0.29 kg/metre³ to about 34 kg/metre³) of the stabilized emulsion composition. In another embodiment, the emulsion stabilizing agent may be added to a stabilized emulsion composition in an amount ranging from about 0.25 lb/bbl to about 4 lb/bbl (about 0.71 kg/metre³ to about 11 kg/metre³) of the stabilized emulsion composition.

The stabilized emulsion compositions of the present invention may optionally contain a variety of additives. Examples of additives useful in the stabilized emulsions may include, but are not limited to, solids, weighting agents, inert solids, fluid loss control agents, emulsifiers, salts, dispersion aids, corrosion inhibitors, emulsion thinners, emulsion thickeners, viscosifiers, and any combination thereof.

In some embodiments, a weighting agent may be used to increase the density of the stabilized emulsion. The weighting agents, which serve to increase the density of the stabilized emulsions, may be any solids known to those skilled in the art as useful for such purpose that do not adversely interact with the emulsion stabilizing agent composition. Examples of weighting agents may include, but are not limited to, barite, calcite, ilmenite, mullite, gallena, manganese oxides, iron oxides, mixtures of these and the like. For example, a ground barium sulfate additive having the tradename BAROID^{®} available from Halliburton Energy Services, Inc. in Houston, Tex., U.S.A. may be used as a weighting agent. The weighting material may typically be added in order to alter the density of the stabilized emulsion. The density of the fluid may be less than about 20 (about 2400 kg/metre³), or less than about 15 (about 1800 kg/metre³), or alternatively less than about 10 pounds per gallon (about 1200 kg/metre³).One of ordinary skill in the art would be able to determine the amount of weighting agent to add to produce a stabilized emulsion with a desired density.

In an embodiment, the stabilized emulsion may comprise fluid-loss control additives, emulsifiers, or both. Fluid loss control agents such as modified lignite, polymers, oxidized asphalt and gilsonite may also be added to the stabilized emulsion. Usually such fluid loss control agents may be employed in an amount which is at least about 0.1, at least about 1, or at least about 5 percent by weight of the total fluid. For example, an additive having the trade name ADAPTA™ available from Halliburton Energy Services, Inc. in Houston, Tex., U.S.A. may be used as a fluid loss control additive. Alkali may also be used, preferably lime (calcium hydroxide or calcium oxide), to bind or react with acidic gases (e.g., CO₂ and H₂S) encountered during drilling in the formation so long as the alkali does not interfere with the emulsion stabilizing agents disclosed herein. The quantity of free lime in a drilling fluid may range from about 1 to about 10 lbs/bbl (about 2.9 kg/metre³ to about 29 kg/metre³), or more preferably about 1 to about 4 lbs/bbl (about 2.9 kg/metre³ to about 11 kg/metre³), although lower ranges such as less than about 2 lbs/bbl (about 5.7 kg/metre³) are preferred for certain esters that tend to hydrolyze in the presence of alkaline compounds as will be known to those skilled in the art. Other suitable agents as an alternative to lime may also be used to adjust and/or stabilize the emulsions with respect to acids.

Various supplemental surfactants and wetting agents conventionally used in emulsions may optionally be incorporated in the stabilized emulsions. Such surfactants may be, for example, fatty acids, soaps of fatty acids, amido amines, polyamides, polyamines, imidazoline derivatives, oxidized crude tall oil, organic phosphate esters, alkyl aromatic sulfates and sulfonates, as well as, mixtures of the above. Generally, such surfactants may be employed in an amount which does not interfere with the use of the stabilized emulsions. For example, the surfactants or wetting agents may be used in an amount that does not interfere with the ability of an a stabilized emulsion to act as a drilling fluid or drill in fluid and remove cuttings from the well bore.

Further, the stabilized emulsion may have added to it or mixed with the stabilized emulsion, other fluids or materials. Such materials may include for example additives to reduce or control temperature rheology or to provide thinning, such as, for example, additives having the tradenames COLDTROL^{®}, RHEMOD™ L, ATC^{®}, and OMC 2™; additives for providing temporary increased viscosity for shipping (transport to the well site) and for use in sweeps, such as, for example an additive having the tradename TEMPERUS™ (modified fatty acid); additives for bridging porous rock, such as, for example additives having the tradename BARACARB^{®} 50; additives for high temperature high pressure filtration control (HTHP FILTRATE) and emulsion stability, such as, for example, additives having the tradename FACTANT™ (highly concentrated tall oil derivative); and supplemental additives for emulsification, such as, for example additives having the tradenames EZ MUL™ NT or LE SUPERMUL™ (polyaminated fatty acids). Blends of thinners such as the OMC 2™, COLDTROL^{®}, and ATC^{®} may also be effective in stabilized emulsions of the invention. All of the aforementioned trademarked products are available from Halliburton Energy Services, Inc. in Houston, Tex., U.S.A.

Viscosifying agents may optionally be employed in the stabilized emulsions of the present invention. Usually, viscosifying agents such as oil and water soluble polymers, polyamide resins, polycarboxylic acids and fatty acid soaps may be employed. The amount of viscosifying agent used in the composition will necessarily vary depending upon the end use of the composition. Usually such viscosifying agents are employed in an amount which is at least about 0.1, at least about 2, or at least about 5 percent by weight of the total fluid. For example, TAU-MOD™ or BARAZAN^{®} D PLUS, both available from Halliburton Energy Services, Inc. in Houston, Tex., U.S.A., may be used as a viscosifying agent.

Still further, dispersion aids, corrosion inhibitors and/or defoamers may be used. These and other suitable auxiliaries and additives are used in amounts known to those skilled in the art depending on the conditions of the particular well bore and subterranean formation.

Generally, the stabilized emulsions of the present invention may be formed using any technique known in the art. For example, the components may be mixed together in any order under agitation condition. A representative method of preparing the stabilized emulsion may comprises mixing an appropriate quantity of the fluid that is at least partially insoluble in the oleaginous fluid and an appropriate quantity of the emulsion stabilizing agent and any optional additives during continuous, mild agitation. An oleaginous fluid may then be added while mixing until a stabilized emulsion is formed. If weighting agents, such as those described above, are to be added, then the weighting agents are typically added after the stabilized emulsion is formed. Alternatively, the stabilized emulsions of the present invention may be prepared by simply adding the emulsion stabilizing agent to an existing stock of drilling fluid. The effectiveness of this treatment may depend on the constituents of the fluid.

An example of a method of the present invention is a method of treating a subterranean formation comprising the steps of providing a treatment fluid comprising a stabilized emulsion comprising an oleaginous fluid, a fluid that is at least partially immiscible with the oleaginous fluid, and an emulsion stabilizing agent; and treating the subterranean formation. In certain exemplary embodiments of the present invention, a method of treating a subterranean formation includes a well completion operation or a drilling operation. In other exemplary embodiments of the present invention, a method of treating a subterranean formation includes a stimulation operation. Examples of stimulation operations of the present invention include fracturing operations and acid stimulation operations, like matrix acidizing and a fracturing acidizing processes. In other exemplary embodiments of the present invention, a method of treating a subterranean formation includes a sand control operation such as installing a gravel pack.

Another example of a method of the present invention is a method of drilling a well bore in a subterranean formation using a stabilized emulsion drilling fluid comprising an oleaginous fluid, a fluid that is at least partially immiscible with the oleaginous fluid, and an emulsion stabilizing agent.

An exemplary method of the present invention is a method of emulsifying crude oil comprising the steps of providing crude oil, a fluid that is at least partially immiscible with the crude oil and an emulsion stabilizing agent; and mixing the crude oil, the fluid that is at least partially immiscible with the crude oil and the emulsion stabilizing agent so as to form a stabilized crude oil emulsion.

To facilitate a better understanding of the present invention, the following examples of certain aspects of some embodiments are given. In no way should the following examples be read to limit, or define, the scope of the invention.

### EXAMPLES

In order to demonstrate the stabilization of an emulsion with the emulsion stabilizing agents disclosed herein, several samples of stabilized emulsions were prepared and allowed to age different time periods. In this example, 1.5 lb/bbl (4.3 kg/m³) of polyelectrolyte (EZ-MUD^{®} GOLD, available from Halliburton Energy Services of Houston, Texas) and 6 lb/bbl (17.1 kg/m³) of a filtration control agent (N-DRIL^{®} HT PLUS, available from Halliburton Energy Services of Houston, Texas) were mixed with 3% KCl salt water using a multi-mixer for 5 minutes followed with 1.0 lb/bbl (2.8 kg/m³) of hydrophobic surfactants (Octadecylamine with a technical grade of 90%) for another 5 minutes. An amount of diesel comprising 20% of the overall fluid volume was added and mixed for another 30 minutes. The resulting mixture was hot-rolled for 16 hours at 230°F (110°C) to form a sample labeled "Sample 1." A second batch of the fluid was prepared according to the same procedure and labeled "Sample 2." The second batch of fluid was viscosified with a viscosifier (BARAZAN^{®} D PLUS, available from Halliburton Energy Services, of Houston, Texas) and hot-rolled for 16 hours. The fluid appearance showed little to no phase separation after 24 hours and 72 hours. The rheological properties of the 8.0 lb/gal (22.8 kg/m³) fluids are shown Table 1.

| **Table 1. Formulation and Properties of Diesel in an Aqueous Fluid** | | | |
|---|---|---|---|
| **Description** | **Units** | **Sample 1** | **Sample 2** |
| Density | lb/gal (kg/metre³) | 8.0 (960) | 8.0 (960) |
| Water | bbl (metre³) | 0.789 (0.094) | 0.789 (0.094) |
| BARAZAN^{®} D PLUS | lb (kg) | 0 | 0.5 (0.2) |
| N-DRIL™ HT PLUS | lb (kg) | 6 (2.7) | 6 (2.7) |
| Emulsifier Blend | lb (kg) | 2.5 (1.1) | 2.5 (1.1) |
| Diesel | bbl (m³) | 0.199 (0.0316) | 0.199 (0.0316) |

| **Rheological Properties** | | | |
|---|---|---|---|
| Hot-rolled at 120°F (49°C) | hr | 0 | 16 |
| Remixed on a Multi-mixer | min | 3 | 3 |
| Plastic viscosity | cP (gram/cm.second) | 29 (0.29) | 37 (0.37) |
| Yield Point | lb/100ft2 (kPa) | 71 (34) | 5 (25) |
| 10 Scc gel | lb/100ft2 (kPa) | 11 (5.3) | 5 (2.4) |
| 10 Min gel | lb/100ft2 (kPa) | 14 (6.7) | 4 (1.9) |
| Fann 35 Readings @120°F (49°C) | | | |
| 600 rpm | | 129 | 127 |
| 300 rpm | | 100 | 90 |
| 200 rpm | | 86 | 71 |
| 100 rpm | | 66 | 46 |
| 6 rpm | | 18 | 6 |
| 3 rpm | | 13 | 4 |

A fluid sample prepared according to the procedure described above was prepared and allowed to age for approximately six weeks. A visual inspection of the fluid confirmed that little to no phase separation had occurred. This result demonstrates that the emulsion is capable of remaining stable for extended periods of time using the emulsion stabilizing agents disclosed herein. Further, the stable emulsion offered the opportunity to adjust the viscosity of the fluid with BARAZAN^{®} D PLUS without adversely affecting the stability of the emulsion.

Therefore, the present invention is well adapted to attain the ends and advantages mentioned as well as those that are inherent therein. The particular embodiments disclosed above are illustrative only, as the present invention may be modified within the scope of the appended claims.

## Claims

1. A stabilized emulsion composition comprising: an oleaginous fluid, a fluid that is at least partially immiscible with the oleaginous fluid, and an emulsion stabilizing agent, wherein the emulsion stabilizing agent comprises a first ionic compound soluble in the oleaginous fluid or the fluid that is at least partially immiscible with the oleaginous fluid, and a second ionic compound with a charge of opposite sign of the first ionic compound and that is at least partially soluble in the opposite fluid as the first ionic compound, wherein the first ionic compound, the second ionic compound, or both comprise an ionic surfactant, and wherein the first ionic compound, the second ionic compound, or both comprise an ionic polyelectrolyte, wherein
the ionic surfactant comprises an anionic surfactant comprising at least one compound selected from the group consisting of: an alkyl carboxylate, an alkylether carboxylate, a N-acylaminoacid, a N-acylglutamate, a N-acylpolypeptide, an alkylbenzenesulfonate, a paraffinic sulfonate, an α-olefinsulfonate, a lignosulfate, a derivative of a sulfosuccinate, a polynapthylmethylsulfonate, an alkyl sulfate, an alkylethersulfate, a monoalkylphosphate, a polyalkylphosphate, a fatty acid, an alkali salt of an acid, an alkali salt of a fatty acid, an alkaline salt of an acid, a sodium salt of an acid, a sodium salt of a fatty acid, an alkyl ethoxylate, a soap, and a combination thereof and the ionic polyelectrolyte comprises a cationic polyelectrolyte comprising a monomer selected from: a vinyl benzyl trimethyl ammonium chloride, a dimethyldiallyl ammonium chloride or a 3-acrylamido-3-methyl butyl trimethyl ammonium chloride, or at least one compound selected from the group consisting of: a polyethylene imine, a polyamide amine, a polyamine, a polyvinylpyrrolidone, chitosan modified with a cationic functional group, a gelatin modified with a cationic functional group, a galactomannan modified with a cationic functional group, a cellulose modified with a cationic functional group, and a combination thereof, or
the ionic surfactant comprises a cationic surfactant comprising at least one compound selected from the group consisting of: an alkyl amine, an alkyl amine salt, a quaternary ammonium salt, an ethoxylated quaternary ammonium salt, an amine oxide, an alkyltrimethyl amine, a triethyl amine, an alkyldimethylbenzylamine, and a combination thereof and the ionic polyelectrolyte comprises an anionic polyelectrolyte comprising at least one compound selected from the group consisting of: a polymer or copolymer comprising a carboxylate group; a sulfonate group; a phosphate group or a phosphonate group; or a monomer selected from: an acrylate monomer; a methacrylate monomer; a styrene carboxylate; a vinyl sulfonate; a 2-acrylamine-2-methyl-propyl sulfonate; a 3-acrylamide-3-methyl butanoate or a salt of malic acid, a polyacrylic acid, a partially-hydrogenated polyacrylamide, a carboxy methyl cellulose, a cellulose modified with an anionic functional group, a polysaccharide modified with an anionic functional group, a galactomannan modified with an anionic functional group, and a combination thereof.

2. A stabilized emulsion composition according to claim 1, wherein the oleaginous fluid comprises at least one fluid selected from the group consisting of: a diesel oil, a crude oil, a paraffin oil, a mineral oil, an olefin, an ester, an amide, an amine, a polyolefin, a polydiorganosiloxane, a siloxane, an organosiloxane, an ether, an acetal, a dialkylcarbonate, a hydrocarbon, and a combination thereof.

3. A stabilized emulsion composition according to claim 1 or 2, wherein the fluid that is at least partially immiscible with the oleaginous fluid comprises at least one fluid selected from the group consisting of: glycerin, a glycol, a polyglycol amine, a polyol, fresh water, sea water, salt water, a brine, and a combination thereof.

4. A method comprising: providing a stabilized emulsion composition according to any one of claims 1 to 3; and placing the stabilized emulsion composition in a subterranean formation as part of a subterranean application.

5. A method comprising: providing a stabilized emulsion composition according to any one of claims 1 to 3; and drilling a well bore in a subterranean formation using the stabilized emulsion composition.

6. A method of preparing a stabilized emulsion composition as defined in claim 1, 2 or 3, the method comprising: providing the oleaginous fluid; providing the fluid that is at least partially immiscible with the oleaginous fluid; providing the emulsion stabilizing agent; and combining the oleaginous fluid, the fluid that is at least partially immiscible with the oleaginous, fluid, and the emulsion stabilizing agent to form a stabilized emulsion composition.

7. A method according to claim 6, further comprising placing the stabilized emulsion composition in a subterranean formation as part of a drilling operation.

## Patentansprüche

1. Stabilisierte Emulsionszusammensetzung, umfassend:
eine ölhaltige Flüssigkeit, eine Flüssigkeit, die zumindest zum Teil unmischbar mit der ölhaltigen Flüssigkeit ist, und einen Emulsionsstabilisator, wobei der Emulsionsstabilisator eine erste ionische Verbindung, die in der ölhaltigen Flüssigkeit oder der Flüssigkeit, die zumindest zum Teil unmischbar mit der ölhaltigen Flüssigkeit ist, löslich ist, und eine zweite ionische Verbindung mit einer entgegengesetzten Ladung zu der ersten ionischen Verbindung umfasst, die zumindest zum Teil löslich in der entgegengesetzten Flüssigkeit zu der ersten ionischen Verbindung ist,
wobei die erste ionische Verbindung, die zweite ionische Verbindung oder beide ein ionisches Tensid umfassen und wobei die erste ionische Verbindung, die zweite ionische Verbindung oder beide einen ionischen Polyelektrolyten umfassen, wobei
das ionische Tensid ein anionisches Tensid umfasst, umfassend mindestens eine Verbindung, die aus der Gruppe bestehend aus folgenden ausgewählt ist: einem Alkylcarboxylat, einem Alkylethercarboxylat, einer N-Acylaminosäure, einem N-Acylglutamat, einem N-Acylpolypeptid, einem Alkylbenzolsulfonat, einem Paraffinsulfonat, einem α-Olefinsulfonat, einem Lignosulfonat, einem Derivat eines Sulfosuccinats, einem Polynaphthylmethylsulfonat, einem Alkylsulfat, einem Alkylethersulfat, einem Monoalkylphosphat, einem Polyalkylphosphat, einer Fettsäure, einem Alkalisalz einer Säure, einem Alkalisalz einer Fettsäure, einem alkalischen Salz einer Säure, einem Natriumsalz einer Säure, einem Natriumsalz einer Fettsäure, einem Alkylethoxylat, einer Seife und einer Kombination davon, und der ionische Polyelektrolyt einen kationischen Polyelektrolyten umfasst, umfassend ein Monomer, das aus folgenden ausgewählt ist: einem Vinylbenzyltrimethylammoniumchlorid, einem Dimethyldiallylammoniumchlorid oder einem 3-Acrylamido-3-methylbutyltrimethylammoniumchlorid, oder mindestens eine Verbindung, die aus der Gruppe bestehend aus folgenden ausgewählt ist: einem Polyethylenimin, einem Polyamidamin, einem Polyamin, einem Polyvinylpyrrolidon, mit einer kationischen funktionellen Gruppe modifiziertem Chitosan, einer mit einer kationischen funktionellen Gruppe modifizierten Gelatine, einem mit einer kationischen funktionellen Gruppe modifizierten Galactomannan, einer mit einer kationischen funktionellen Gruppe modifizierten Cellulose und einer Kombination davon, oder
das ionische Tensid ein kationisches Tensid umfasst, umfassend mindestens eine Verbindung, die aus der Gruppe bestehend aus folgenden ausgewählt ist: einem Alkylamin, einem Alkylaminsalz, einem quartären Ammoniumsalz, einem ethoxylierten quartären Ammoniumsalz, einem Aminoxid, einem Alkyltrimethylamin, einem Triethylamin, einem Alkyldimethylbenzylamin und einer Kombination davon, und der ionische Polyelektrolyt einen anionischen Polyelektrolyten umfasst, umfassend mindestens eine Verbindung, die aus der Gruppe bestehend aus folgenden ausgewählt ist: einem Polymer oder Copolymer, umfassend eine Carboxylatgruppe; eine Sulfonatgruppe; eine Phosphatgruppe oder eine Phosphonatgruppe; oder einem Monomer, das aus folgenden ausgewählt ist: einem Acrylatmonomer; einem Methacrylatmonomer; einem Styrolcarboxylat; einem Vinylsulfonat; einem 2-Acrylamin-2-methylpropylsulfonat; einem 3-Acrylamid-3-methylbutanoat oder einem Salz von Äpfelsäure, einer Polyacrylsäure, einem teilhydrierten Polyacrylamid, einer Carboxymethylcellulose, einer mit einer anionischen funktionellen Gruppe modifizierten Cellulose, einem mit einer anionischen funktionellen Gruppe modifizierten Polysaccharid, einem mit einer anionischen funktionellen Gruppe modifizierten Galactomannan und einer Kombination davon.

2. Stabilisierte Emulsionszusammensetzung nach Anspruch 1, wobei die ölhaltige Flüssigkeit mindestens eine Flüssigkeit umfasst, die aus der Gruppe bestehend aus folgenden ausgewählt ist: einem Dieselöl, einem Erdöl, einem Paraffinöl, einem Mineralöl, einem Olefin, einem Ester, einem Amid, einem Amin, einem Polyolefin, einem Polydiorganosiloxan, einem Siloxan, einem Organosiloxan, einem Ether, einem Acetal, einem Dialkylcarbonat, einem Kohlenwasserstoff und einer Kombination davon.

3. Stabilisierte Emulsionszusammensetzung nach Anspruch 1 oder 2, wobei die Flüssigkeit, die zumindest zum Teil unmischbar mit der ölhaltigen Flüssigkeit ist, mindestens eine Flüssigkeit umfasst, die aus der Gruppe bestehend aus folgenden ausgewählt ist: Glycerin, einem Glykol, einem Polyglykolamin, einem Polyol, Süßwasser, Meerwasser, Salzwasser, einer Kochsalzlösung und einer Kombination davon.

4. Verfahren, umfassend: Bereitstellen einer stabilisierten Emulsionszusammensetzung nach einem der Ansprüche 1 bis 3 und Einbringen der stabilisierten Emulsionszusammensetzung in eine unterirdische Formation als Teil einer unterirdischen Anwendung.

5. Verfahren, umfassend: Bereitstellen einer stabilisierten Emulsionszusammensetzung nach einem der Ansprüche 1 bis 3 und Bohren eines Bohrlochs in eine unterirdische Formation unter Verwendung der stabilisierten Emulsionszusammensetzung.

6. Verfahren zur Herstellung einer stabilisierten Emulsionszusammensetzung nach Anspruch 1, 2 oder 3, wobei das Verfahren Folgendes umfasst: Bereitstellen der ölhaltigen Flüssigkeit; Bereitstellen der Flüssigkeit, die zumindest zum Teil unmischbar mit der ölhaltigen Flüssigkeit ist; Bereitstellen des Emulsionsstabilisators und Vereinigen der ölhaltigen Flüssigkeit, der Flüssigkeit, die zumindest zum Teil unmischbar mit der ölhaltigen Flüssigkeit ist, und des Emulsionsstabilisators, um eine stabilisierte Emulsionszusammensetzung zu bilden.

7. Verfahren nach Anspruch 6, das weiterhin das Einbringen der stabilisierten Emulsionszusammensetzung in eine unterirdische Formation als Teil eines Bohrvorgangs umfasst.

## Revendications

1. Composition d'émulsion stabilisée comprenant : un fluide huileux, un fluide qui est au moins partiellement non miscible avec le fluide huileux et un agent stabilisant d'émulsion, dans laquelle l'agent stabilisant d'émulsion comprend un premier composé ionique soluble dans le fluide huileux ou le fluide qui est au moins partiellement non miscible avec le fluide huileux et un second composé ionique portant une charge de signe opposé par rapport au premier composé ionique et qui est au moins partiellement soluble dans l'autre fluide par rapport au premier composé ionique, dans laquelle le premier composé ionique, le second composé ionique ou les deux comprennent un tensioactif ionique et dans laquelle le premier composé ionique, le second composé ionique ou les deux comprennent un polyélectrolyte ionique, dans laquelle
le tensioactif ionique comprend un tensioactif anionique comprenant au moins un composé choisi dans le groupe constitué par : un carboxylate d'alkyle, un carboxylate d'éther d'alkyle, un N-acylaminoacide, un N-acylglutamate, un N-acylpolypeptide, un alkylbenzènesulfonate, un sulfonate paraffinique, un α-oléfinesulfonate, un lignosulfate, un dérivé d'un sulfosuccinate, un polynaphtylméthylsulfonate, un alkylsulfate, un alkyléthersulfate, un monoalkylphosphate, un polyalkylphosphate, un acide gras, un sel d'alcali et d'un acide, un sel d'alcali et d'un acide gras, un sel alcalin d'un acide, un sel de sodium d'un acide, un sel de sodium d'un acide gras, un produit d'éthoxylation d'alkyle, un savon et une association de ceux-ci et le polyélectrolyte ionique comprend un polyélectrolyte cationique comprenant un monomère choisi parmi : un chlorure de vinylbenzyltriméthylammonium, un chlorure de diméthyldiallylammonium ou un chlorure de 3-acrylamido-3-méthylbutyltriméthylammonium, ou au moins un composé choisi dans le groupe constitué par : une polyéthylèneimine, une amine de polyamide, une polyamine, une polyvinylpyrrolidone, le chitosane modifié par un groupe fonctionnel cationique, une gélatine modifiée par un groupe fonctionnel cationique, un galactomannane modifié par un groupe fonctionnel cationique, une cellulose modifiée par un groupe fonctionnel cationique et une association de ceux-ci, ou
le tensioactif ionique comprend un tensioactif cationique comprenant au moins un composé choisi dans le groupe constitué par : une alkylamine, un sel d'alkylamine, un sel d'ammonium quaternaire, un sel d'ammonium quaternaire éthoxylé, un oxyde d'amine, une alkyltriméthylamine, une triéthylamine, une alkyldiméthylbenzylamine et une association de ceux-ci et le polyélectrolyte ionique comprend un polyélectrolyte anionique comprenant au moins un composé choisi dans le groupe constitué par : un polymère ou copolymère comprenant un groupe carboxylate ; un groupe sulfonate ; un groupe phosphate ou un groupe phosphonate ; ou un monomère choisi parmi : un monomère acrylate ; un monomère méthacrylate ; un styrènecarboxylate ; un vinylsulfonate ; un 2-acrylamine-2-méthylpropylsulfonate ; un butanoate de 3-acrylamide-3-méthyle ou un sel de l'acide malique, un poly(acide acrylique), un polyacrylamide partiellement hydrogéné, une carboxyméthylcellulose, une cellulose modifiée par un groupe fonctionnel anionique, un polysaccharide modifié par un groupe fonctionnel anionique, un galactomannane modifié par un groupe fonctionnel anionique et une association de ceux-ci.

2. Composition d'émulsion stabilisée selon la revendication 1, dans laquelle le fluide huileux comprend au moins un fluide choisi dans le groupe constitué par : un carburant diesel, une huile brute, une huile de paraffine, une huile minérale, une oléfine, un ester, un amide, une amine, une polyoléfine, un polydiorganosiloxane, un siloxane, un organosiloxane, un éther, un acétal, un carbonate de dialkyle, un hydrocarbure et une association de ceux-ci.

3. Composition d'émulsion stabilisée selon la revendication 1 ou 2, dans laquelle le fluide qui est au moins partiellement non miscible avec le fluide huileux comprend au moins un fluide choisi dans le groupe constitué par : la glycérine, un glycol, une polyglycolamine, un polyol, l'eau douce, l'eau de mer, l'eau salée, une saumure et une association de ceux-ci.

4. Procédé comprenant : l'obtention d'une composition d'émulsion stabilisée selon l'une quelconque des revendications 1 à 3 ; et l'introduction de la composition d'émulsion stabilisée dans une formation souterraine en tant que partie d'une application souterraine.

5. Procédé comprenant : l'obtention d'une composition d'émulsion stabilisée selon l'une quelconque des revendications 1 à 3 ; et le forage d'un puits de forage dans une formation souterraine à l'aide de la composition d'émulsion stabilisée.

6. Procédé de préparation d'une composition d'émulsion stabilisée telle que définie dans la revendication 1, 2 ou 3, le procédé comprenant : l'obtention du fluide huileux ; l'obtention du fluide qui est au moins partiellement non miscible avec le fluide huileux ; l'obtention de l'agent stabilisant d'émulsion ; et la combinaison du fluide huileux, du fluide qui est au moins partiellement non miscible avec le fluide huileux et de l'agent stabilisant d'émulsion pour former une composition d'émulsion stabilisée.

7. Procédé selon la revendication 6, comprenant en outre l'introduction de la composition d'émulsion stabilisée dans une formation souterraine en tant que partie d'une opération de forage.
